# EUROPÄISCHE PATENTSCHRIFT

(11) **EP 1 297 996 B1**
(45) Veröffentlichungstag und Bekanntmachung des Hinweises auf die Patenterteilung: **09.05.2007**
(21) Anmeldenummer: 02090197.1
(22) Anmeldetag: 31.05.2002
(51) Int. Cl.: B60N 2/30, B60N 2/36

(54) **Sitz, insbesondere Fahrzeugsitz einer hinteren Sitzreihe eines Kraftfahrzeuges**
Seat, particularly vehicle seat for the last seat row of an automotive vehicle
Siège, en particulier siège de véhicule pour le dernier rang de siège d'un véhicule automobile

(30) Priorität: 28.09.2001 DE 10148130
(43) Veröffentlichungstag der Anmeldung: 02.04.2003
(73) Patentinhaber: Volkswagen Aktiengesellschaft, 38436 Wolfsburg (DE)
(72) Erfinder: ANDRONIS, Odysseus, 38302 Wolfenbüttel (DE)
(74) Vertreter: Schneider, Henry

(56) Entgegenhaltungen:
- DE-A- 2 849 985
- DE-A- 4 237 258
- DE-A- 4 422 920
- DE-A- 19 737 304
- DE-U- 29 512 327
- GB-A- 2 268 877
- GB-A- 2 356 557
- PATENT ABSTRACTS OF JAPAN vol. 2000, no. 12, 3. Januar 2001 (2001-01-03) -& JP 2000 255289 A (MAZDA MOTOR CORP), 19. September 2000 (2000-09-19)

## Beschreibung

Die Erfindung betrifft einen Sitz, insbesondere einen Fahrzeugsitz einer hinteren Sitzreihe eines Kraftfahrzeuges, mit einem Sitzteil, einer Rückenlehne und einer an der Rückenlehne angeordneten Kopfstütze, mit den im Oberbegriff des Anspruches 1 genannten Merkmalen.

Es ist bekannt, Fahrzeugsitze zur Gewinnung eines zusätzlichen Nutzraumes für den Gütertransport um- und/oder hochzuklappen. Insbesondere kommt hierfür die hintere Sitzreihe eines Kombifahrzeuges in Betracht. Hierzu gibt es verschiedene Anordnungen, die ein Umlegen, Zurückklappen oder Hochklappen der Teile eines Fahrzeugsitzes ermöglichen, um innerhalb des Fahrzeuges das Volumen für den Transport von Gütern zu vergrößern. Die Fahrzeugsitze können dabei, in Abhängigkeit von der Ausführung der Klappvorrichtung, in eine vordere Position verschoben und zusammengeklappt werden oder sie können mit dem Sitzteil zum Fahrzeugboden hin verschwenkt und flach aufgeklappt werden, so dass die Rückseite des Fahrzeugsitzes einen Teil der Ladefläche bildet. Eine Sitzanordnung mit einem derart verschwenkbaren und flach am Fahrzeugboden aufklappbaren Fahrzeugsitz ist aus der DE 44 22 920 A1 bekannt. Der Fahrzeugsitz ist um eine Schwenkachse, die unterhalb des vorderen Bereiches des Sitzes angeordnet ist, verschwenkbar. Die Enden der Schwenkachse sind in seitlich unterhalb des Sitzes verlaufenden Führungsschienen längsverschiebbar gelagert. Eine derartige Ausbildung beansprucht jedoch viel Raum im Bereich des Fahrzeugbodens und erfordert einen größeren Aufwand bei der Überführung des Fahrzeugsitzes von seiner Gebrauchslage in eine Nichtgebrauchslage.

Die DE 28 49 985 A1 beschreibt eine weitere Sitzanordnung mit einem zu einem Teil der Ladefläche umklappbaren Rücksitz. Der umklappbare Fahrzeugsitz ist bei dieser Lösung nicht längsverschiebbar gelagert. Damit der Fahrzeugsitz in eine langgestreckte Position auf dem Fahrzeugboden ausgeklappt werden kann, muss der vor dem umklappbaren Sitz angeordnete Sitz aus seiner Gebrauchslage entfernt werden.

Eine andere Sitzanordnung ist aus der DE 42 37 258 C2 bekannt, die im zusammengeklappten Zustand in eine an der Ladefläche des Fahrzeuges ausgebildeten Mulde hineinschwenkbar ist, wobei die Unterseite des Sitzteiles einen Teil der Ladefläche bildet.

Eine weitere Lösung zu einem klappbaren Sitz eines Kraftfahrzeuges ist aus der DE 197 37 304 A1 bekannt. Hierbei handelt es sich insbesondere um einen Sitz der dritten Sitzreihe, welcher im Wesentlichen aus einem Sitzteil und einem mit diesem scharnierartig verbundenen Rückenlehnenteil besteht. Der Sitz ist aus seiner Gebrauchslage in eine Nichtgebrauchslage überführbar, in welcher zumindest das Sitzteil mit seiner Rückfläche eine mit dem Fahrzeugboden etwa ebene Ladefläche bildet. Eine verriegelbare Hebelvorrichtung ist vorgesehen, durch die eine Schwenkung des Sitzteiles um zirka 180° nach vorne und eine gleichzeitige Verlagerung nach hinten möglich ist. Bei dieser Lösung ist insbesondere nachteilig, dass die verriegelbare Hebelvorrichtung mit dem zugehörigen Schwenkmechanismus aufwendig und damit kostenintensiv ist.

Eine ebenso aufwendige Konstruktion wird in der DE 295 12 327 U1 beschrieben, wobei es sich um einen versenkbaren Rücksitz eines Kraftfahrzeuges handelt. Nachteilig ist einerseits der relativ große Bauaufwand für das zum Versenken der Sitzteile notwendige Getriebe. Andererseits erfordert diese Lösung ein zur Unterbringung der Sitzteile im Bereich des Fahrzeugbodens erhöhtes Raumangebot, was zumindest bei kleineren Kraftfahrzeugen nicht realisierbar ist.

Ferner ist aus der GB-A-2 356 557 ein Fahrzeugsitz einer hinteren Sitzreihe eines Kraftfahrzeuges bekannt, der ein Sitzteil und eine Rückenlehne umfasst, wobei das Sitzteil und die Rückenlehne von einer Gebrauchslage in eine Nichtgebrauchslage und umgekehrt überfahrbar sind, und das Sitzteil in einer im Wesentlichen horizontalen Fahrzeugebene unterhalb der Rückenlehne verschiebbar gelagert ist, während die Rückenlehne um eine Schwenkachse in diese horizontale Fahrzeugebene verschwenkbar ist.

Nachteilig bei den bekannten Lösungen ist, dass das Sitzteil und die Rückenlehne eines Sitzes einer hinteren Sitzreihe nur mit einem größeren Aufwand von ihrer Gebrauchslage in eine Nichtgebrauchslage und umgekehrt gebracht werden können und dass trotz Veränderung der Position des/der Sitze(s) der hintere Sitzbereich des Fahrzeuges nur unzureichend als Laderaum genutzt werden kann. Dabei ist es insbesondere nachteilig, dass sich in der Nichtgebrauchslage des Sitzes keine durchgängige ebene Ladefläche innerhalb des Fahrzeuges ergibt und durch die nach vorne geklappten Teile des Sitzes die Länge des vergrößerten Laderaumes nicht vollständig nutzbar ist.

Der Erfindung liegt daher die Aufgabe zugrunde, einen Fahrzeugsitz der eingangs genannten Art zu schaffen, bei dem sich jeweils das Sitzteil und die Rückenlehne eines Sitzes einer hinteren Sitzreihe auf einfache Weise von einer Gebrauchslage in eine Nichtgebrauchslage und umgekehrt bringen lassen und der es ermöglicht, den hinteren Sitzbereich des Fahrzeuges mit geringem Aufwand und innerhalb kurzer Zeit in einen großen Laderaum mit optimalen Nutzungsmöglichkeiten des Raumangebotes umzuwandeln.

Diese Aufgabe wird durch einen Fahrzeugsitz mit den im Anspruch 1 genannten Merkmalen gelöst. Dadurch, dass das Sitzteil in einer im Wesentlichen horizontalen Fahrzeugebene unterhalb der Rückenlehne verschiebbar gelagert ist und die Rückenlehne um eine Schwenkachse in diese horizontale Fahrzeugebene verschwenkbar ist, wird vorteilhaft erreicht, dass mit geringem Aufwand eine Laderaumvergrößerung durchführbar ist. Insbesondere, wenn ein oberes Sitzkissen eines zweiteiligen Sitzkissens unabhängig von einem unteren Sitzkissen des Sitzteiles entgegen einer üblichen Fahrtrichtung des Fahrzeuges unterhalb der Rückenlehne - quasi nach hinten - verschiebbar ist, lässt sich die Rückenlehne selber in die zuvor von dem Sitzteil eingenommene Position innerhalb der horizontalen Führungsebene verschwenken. Neben der hierdurch erreichbaren, im Wesentlichen ebenen Ladefläche ergibt sich ein maximal zu erreichendes Stauvolumen.

Es ist vorgesehen, dass das untere Sitzkissen des Sitzteiles fest mit der Karosserie des Fahrzeuges verbunden und das obere Sitzkissen in seiner Lage veränderbar ist. Dadurch wird es möglich, das obere Sitzkissen in der Nichtgebrauchslage des Sitzteiles in geeigneter Weise im Fahrzeug unterzubringen.

Der besondere Vorteil der Erfindung besteht darin, dass sich der Sitz mit wenigen Handgriffen von seiner Gebrauchslage in eine vorbestimmte Nichtgebrauchslage bringen lässt. Die vorbestimmte Nichtgebrauchslage des Sitzes ist vorteilhafter Weise so ausgebildet, dass im hinteren Sitzbereich des Fahrzeuges ein großes zusätzliches Raumangebot geschaffen wird, das optimal als Laderaum nutzbar ist. Der für die Unterbringung der Teile des Sitzes in der Nichtgebrauchslage benötigte Raum ist dabei durch die Teilung des Sitzteiles in ein oberes Sitzkissen und ein unteres Sitzkissen auf ein notwendiges Mindestmaß beschränkt.

Die Erfindung sieht also vor, das Sitzteil aus einem oberen Sitzkissen und einem unteren Sitzkissen auszubilden, wobei das obere Sitzkissen und das untere Sitzkissen über Kontaktflächen in Verbindung stehen, die jeweils in einer horizontalen Ebene angeordnet sind, und die Rückenlehne an ihrer Rückseite mit einem Trägerteil verbunden ist, das an einem Querträger der Karosserie um eine quer zur Fahrtrichtung des Fahrzeuges verlaufende erste Schwenkachse schwenkbar gelagert ist. Hierdurch wird ein Fahrzeugsitz geschaffen, bei dem sich das Sitzteil und die Rückenlehne eines Sitzes einer hinteren Sitzreihe auf einfache Weise von einer Gebrauchslage in eine Nichtgebrauchslage und umgekehrt bringen lassen, und der es ermöglicht, den hinteren Sitzbereich des Fahrzeuges innerhalb kurzer Zeit in einen großen Laderaum mit optimalen Nutzungsmöglichkeiten des Raumangebotes umzuwandeln.

Darüber hinaus ist in bevorzugter Ausgestaltung der Erfindung vorgesehen, dass im Laderaum des Fahrzeuges ein oberer Boden und ein unterer Boden parallel und beabstandet zueinander angeordnet sind, von denen der obere Boden in seiner Position veränderbar und der untere Boden fest mit der Karosserie des Fahrzeuges verbunden ist. Mit der Erfindung wird so ein zweckentsprechender Stauraum geschaffen und eine völlig ebene Ladefläche erreicht.

Ferner ist in bevorzugter Ausgestaltung der Erfindung vorgesehen, dass der obere Boden aus einem vorderen Bodenteil und einem hinteren Bodenteil besteht, von denen das vordere Bodenteil an dem Querträger der Karosserie um eine parallel zur ersten Schwenkachse verlaufende zweite Schwenkachse schwenkbar angeordnet ist und beide Bodenteile über ein Gelenk um eine dritte Schwenkachse drehbeweglich miteinander verbunden sind, wobei die dritte Schwenkachse parallel zur ersten Schwenkachse und zur zweiten Schwenkachse verläuft. Der obere Boden kann auf diese Weise schnell und einfach in eine Lage gebracht werden, in der er den Stauraum abdeckt und dabei einen Teil der Ladefläche bildet. Das Entfernen des oberen Bodens ist ebenso schnell und einfach möglich.

Nach weiterer bevorzugter Ausgestaltung der Erfindung ist vorgesehen, dass der Abstand des oberen Bodens zum unteren Boden so dimensioniert ist, dass in der Nichtgebrauchslage des Sitzteiles dieser Zwischenraum wenigstens als Stauraum für das obere Sitzkissen und die Hutablage nutzbar ist. Innerhalb des Stauraums sind damit sowohl das Sitzkissen als auch die Hutablage gegen ein unbeabsichtigtes Verrutschen während der Fahrt sowie gegen Verschmutzungen geschützt.

Darüber hinaus ist in bevorzugter Ausgestaltung der Erfindung vorgesehen, dass das Trägerteil eine rückwärtige Auflagefläche aufweist, die ebenflächig ausgebildet ist. Dadurch wird eine durchgängige ebene Ladefläche geschaffen, die sich über den gesamten Bereich des Laderaumes und den Bereich der hinteren Sitzreihe des Fahrzeuges bis hin zu den Rückenlehnen der jeweils vor der hinteren Sitzreihe angeordneten Sitze erstreckt.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine schematische Seitenansicht eines hinteren Bereiches eines Innenraumes eines Fahrzeuges mit einem Sitz einer hinteren Sitzreihe und einem dahinter befindlichen Laderaum des Fahrzeuges, wobei der Sitz sich in der Gebrauchslage befindet und
- Figur 2: eine schematische Seitenansicht eines hinteren Bereiches eines Innenraumes eines Fahrzeuges mit einem Sitz einer hinteren Sitzreihe und einem dahinter befindlichen Laderaum des Fahrzeuges, wobei der Sitz sich in der Nichtgebrauchslage befindet.

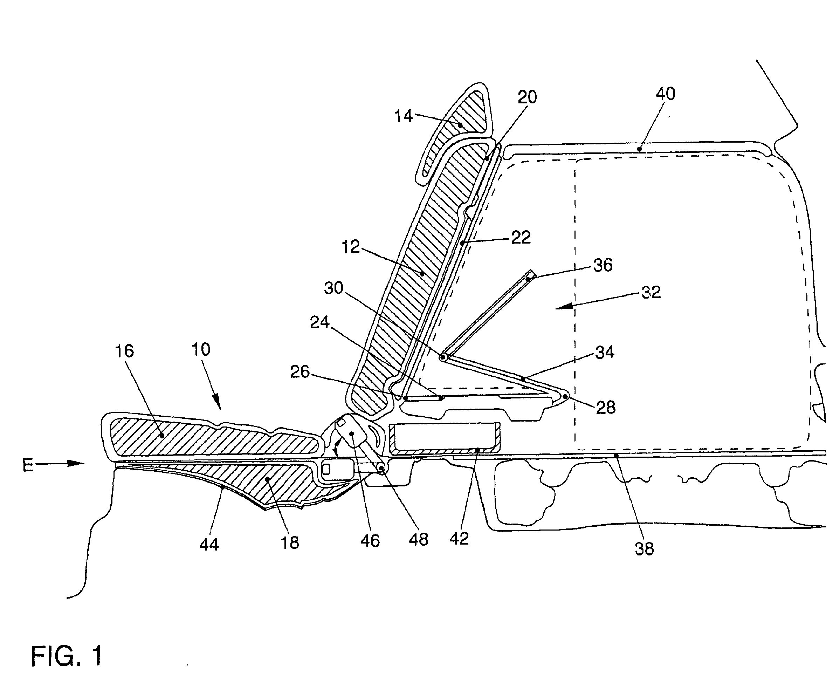

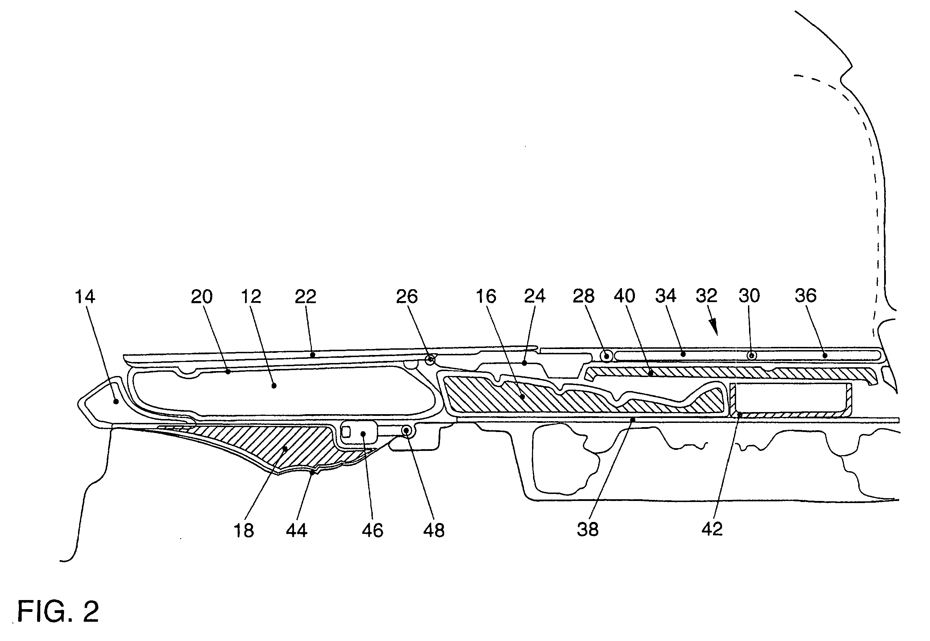

In den Figuren 1 und 2 sind die einzelnen Teile und Baugruppen des erfindungsgemäßen Sitzes in einer ersten Ausführungsvariante symbolhaft und nur mit den für die Erfindung wesentlichen Bestandteilen dargestellt. Gleiche Teile und Baugruppen des Sitzes sind in den Figuren mit gleichen Bezugszeichen versehen und werden daher in der Regel auch jeweils nur einmal beschrieben.

In der Figur 1 ist der hintere Bereich eines Innenraumes eines Kraftfahrzeuges mit einem Sitz einer hinteren Sitzreihe und einem Laderaum schematisch dargestellt. Die Darstellung zeigt den Sitz in der normalen Sitzposition, die der Gebrauchslage des Sitzes entspricht. Der Sitz besteht im Wesentlichen aus einem Sitzteil 10, einer Rückenlehne 12 und einem Trägerteil 22 der Rückenlehne 12. Des Weiteren ist an der Rückenlehne 12 eine Kopfstütze 14 angeordnet. Die Kopfstütze 14 ist in an sich bekannter Weise über Tragstangen (nicht dargestellt) mit der Rückenlehne 12 verbunden und in der Höhe verstellbar. Die Darstellung gemäß Figur 1 zeigt die Kopfstütze 14 in ihrer abgesenkten Position, in der sie im oberen Bereich der Rückenlehne 12 unmittelbar an dieser anliegt.

Das Sitzteil 10 ist in einer horizontalen Ebene E geteilt ausgeführt und besteht aus einem oberen Sitzkissen 16 und einem unteren Sitzkissen 18. Das untere Sitzkissen 18 des Sitzteiles 10 ist fest mit dem Fahrzeugboden 44 verbunden. Die Position des oberen Sitzkissens 16 wird durch eine an sich bekannte Verriegelungseinrichtung (nicht dargestellt) gesichert.

Die Rückenlehne 12 ist an ihrer Rückseite 20 mit einem Trägerteil 22 verbunden, das an einem Querträger 24 der Karosserie um eine quer zur Fahrtrichtung des Fahrzeuges verlaufende erste Schwenkachse 26 schwenkbar gelagert ist. Der Querträger 24 ist vorzugsweise über Schraubverbindungen mit der Karosserie des Fahrzeuges verbunden, die sowohl eine einfache Montage des Querträgers 24 bei einem Neufahrzeug als auch dessen nachträgliches Anbringen innerhalb eines Gebrauchtfahrzeuges ermöglichen. Die Verbindung der Rückenlehne 12 mit dem Trägerteil 22 ist so gestaltet, dass die Rückenlehne 12 zusammen mit dem Trägerteil 22 um die erste Schwenkachse 26 schwenkbar und dabei nach vorne klappbar ist. Eine nicht dargestellte Verriegelungseinrichtung verhindert in jeder Lage der Rückenlehne 12 ein ungewolltes Schwenken der Rückenlehne 12 jeweils um die erste Schwenkachse 26 und damit eine Veränderung der Position der Rückenlehne 12 zum Sitzteil 10.

Im Bereich des Laderaumes, der an die hintere Sitzreihe des Fahrzeuges angrenzt, sind ein oberer Boden 32 und ein unterer Boden 38 parallel und beabstandet zueinander angeordnet. Der obere Boden 32 ist zweiteilig ausgebildet und in seiner Position veränderbar. Der untere Boden 38 ist fest mit der Karosserie des Fahrzeuges verbunden. Der obere Boden 32 besteht aus einem vorderen Bodenteil 34 und einem hinteren Bodenteil 36, die beide etwa gleichgroß sind. Das vordere Bodenteil 34 ist an dem Querträger 24 der Karosserie um eine parallel zur ersten Schwenkachse 26 verlaufende zweite Schwenkachse 28 schwenkbar gelagert. Das vordere Bodenteil 34 und das hintere Bodenteil 36 sind über ein Gelenk um eine dritte Schwenkachse 30 drehbeweglich miteinander verbunden. Die dritte Schwenkachse 30 verläuft parallel zur ersten Schwenkachse 26 und zweiten Schwenkachse 28.

Der Abstand des oberen Bodens 32 zum unteren Boden 38 ist so dimensioniert, dass wenigstens das obere Sitzkissen 16 und eine Hutablage 40 in der Nichtgebrauchslage des Sitzteiles 10 (Figur 2) in diesem Stauraum untergebracht werden können. Das vordere Bodenteil 34 und das hintere Bodenteil 36 lassen sich zusammenklappen, wobei der obere Boden 32 im zusammengeklappten Zustand auf dem Querträger 24 zur Ablage kommt. Die Figur 1 zeigt zur besseren Veranschaulichung den oberen Boden 32 in einem Zustand, in dem das vordere Bodenteil 34 und das hintere Bodenteil 36 teilweise auseinander geklappt sind.

Eine bevorzugte Ausgestaltung der Erfindung sieht vor, dass der obere Boden 32 im Laderaum in der Höhe so angeordnet ist, dass die Ladekante und die Ladefläche des Fahrzeuges in etwa der gleichen Ebene liegen. Dadurch wird das Be- und Entladen des Fahrzeuges wesentlich erleichtert.

Gemäß einer weiteren bevorzugten Ausgestaltung der Erfindung sind das vordere Bodenteil 34 und das hintere Bodenteil 36 in Sandwichbauweise hergestellt. Der besondere Vorteil besteht dabei darin, dass die beiden Bodenteile 34, 36 nur ein geringes Gewicht haben und trotzdem über eine hohe Stabilität verfügen.

Die Gurthalterungen 46 sind so am Fahrzeugboden 44 befestigt, dass sie sich aus einer Gebrauchslage bei Nichtgebrauch versenken lassen. Hierzu ist vorgesehen, dass die Gurthalterungen 46 am Fahrzeugboden 44 um eine vierte Schwenkachse 48, die parallel zu den anderen Schwenkachsen 26, 28, 30 verläuft, schwenkbar gelagert sind. In der Figur 1 ist eine Gurthalterung 46 in zwei Positionen dargestellt, die jeweils der Gebrauchslage und der Nichtgebrauchslage der Gurthalterung 46 entspricht. Die Schwenkbewegung der Gurthalterung 46 ist dabei durch zwei in unterschiedliche Richtung weisende Pfeile angedeutet.

Unter dem Querträger 24 befindet sich im Laderaum des Fahrzeuges ein Ablagebehälter 42, der zur Aufbewahrung unterschiedlicher Gegenstände genutzt werden kann. Der gesamte Laderaum wird im oberen Bereich von einer als Sichtschutz dienenden Hutablage 40 abgedeckt.

In der Figur 2 ist der hintere Bereich eines Innenraumes eines Kraftfahrzeuges mit den Teilen eines Sitzes einer hinteren Sitzreihe und einem Laderaum schematisch dargestellt. Die Darstellung zeigt den Sitz in seiner Nichtgebrauchslage, die zur Unterbringung der Teile des Sitzes innerhalb des Fahrzeuges vorgesehen ist. Dabei ist das obere Sitzkissen 16 des Sitzteiles 10 zur Aufbewahrung innerhalb des Fahrzeuges nach hinten in den Stauraum, der sich im unteren Bereich des Laderaumes des Fahrzeuges befindet und vom oberen Boden 32 abgedeckt wird, verschoben. Die rückwärtige Fläche des Trägerteiles 22 sowie die oberen Flächen des vorderen Bodenteiles 34 und des hinteren Bodenteiles 36 des oberen Bodens 32 bilden in dieser Anordnung in vorteilhafter Weise eine durchgängige ebene Ladefläche.

Die Funktion des erfindungsgemäßen Sitzes gemäß dem in den Figuren 1 und 2 dargestellten bevorzugten Ausführungsbeispiel der Erfindung zur Herstellung der Gebrauchslage und der Nichtgebrauchslage wird nachfolgend beschrieben.

Vor dem Verschieben des oberen Sitzkissens 16 nach hinten wird zunächst dessen Verriegelung (nicht dargestellt), die in Form einer formschlüssigen und/oder kraftschlüssigen Verbindung ausgebildet sein kann, manuell gelöst. Die Gurthalterungen 46 lassen sich vorteilhafterweise in einen im unteren Sitzkissen 18 vorgesehenen Freiraum verschwenken.

Das obere Sitzkissen 16 kann danach ungehindert mit wenigen Handgriffen nach hinten in den Bereich des Laderaumes des Fahrzeuges verschoben werden. Die mit dem Trägerteil 22 verbundene Rückenlehne 12 wird nach dem Lösen einer nicht dargestellten Arretierung nach vorn in Richtung des Sitzteiles 10 verschwenkt, bis sie auf dem unteren Sitzkissen 18 zur Auflage kommt. Zum Verschwenken der Rückenlehne 12 nach vorne ist es bei der erfindungsgemäßen Lösung vorteilhafterweise nicht erforderlich, die Kopfstütze 14 vorher zu demontieren oder die Kopfstütze 14 auf die Rückenlehne 12 abzusenken, da der Abstand zum vorderen Sitz groß genug ist und somit ausreichend Freiraum zum Verschwenken der Rückenlehne 12 vorhanden ist. Nach dem Verschwenken der Rückenlehne 12 ist diese in geeigneter Weise in der Nichtgebrauchslage zu arretieren.

Die Hutablage 40 kann vorteilhafterweise zusammen mit dem oberen Sitzkissen 16 im Stauraum zwischen dem oberen Boden 32 und unteren Boden 38 untergebracht werden. Des Weiteren ist die Unterbringung wenigstens eines Ablagebehälters 42 in diesem Stauraum vorgesehen. Das vordere Bodenteil 34 und das hintere Bodenteil 36 des oberen Bodens 32 werden danach auseinander geklappt und in eine ausgestreckte Lage gebracht. Dabei wird auf einfache und vorteilhafte Weise eine im gesamten Bereich der hinteren Sitzreihe und das Laderaumes durchgängige und ebene Ladefläche geschaffen (Figur 2). Die Ladefläche erstreckt sich vom hinteren Ende des Fahrzeuges bis zu den Rückenlehnen 12 der jeweils vor der hinteren Sitzreihe angeordneten Sitze. Die Erfindung schafft auf diese Weise ein großes Raumangebot für den Transport von Gütern und ermöglicht eine optimale Raumausnutzung.

Soll die hintere Sitzreihe für die Personenbeförderung genutzt werden, so können die Sitze der hinteren Sitzreihe schnell und auf einfache Weise in ihre Gebrauchslage überführt werden. Vor dem Zurückklappen der Rückenlehne 12 in ihre ursprüngliche Lage wird zunächst die Arretierung (nicht dargestellt) der Rückenlehne 12 gelöst. Danach kann die Rückenlehne 12 durch ein Verschwenken zusammen mit dem Trägerteil 22 um die erste Schwenkachse 26 in ihre Ausgangslage gebracht und durch Betätigung der Arretierung in ihrer Lage fixiert werden. In dieser Ausgangslage wird die Kopfstütze 14 entsprechend den Körpermaßen des Fahrzeuginsassen in die gewünschte Höhenposition gebracht, in der sie durch eine an sich bekannte Höhenverriegelungseinrichtung arretierbar ist.

Der obere Boden 32 wird angehoben und beide Teile 34, 36 des oberen Bodens 32 werden zusammengeklappt. Danach kann der obere Boden 32 auf der oberen Seite des Querträgers 24 abgelegt werden. Das obere Sitzkissen 16 ist nach vorne zu verschieben, bis es auf dem unteren Sitzkissen 18 passgerecht aufliegt. Danach ist das obere Sitzkissen 16 wieder in seiner Lage zu fixieren.

Die Gurthalterungen 46 können aus dem Raum, der zu ihrer Aufbewahrung dient, in ihre ursprüngliche Lage um die vierte Schwenkachse 48 verschwenkt und dabei in ihre Funktionslage gebracht werden.

Schließlich ist die Hutablage 40 aus dem Stauraum zu entnehmen und mittels an sich bekannter Befestigungselemente (nicht dargestellt) wieder in ihrer ursprünglichen Lage anzuordnen.

Die Erfindung hat den entscheidenden Vorteil, dass die Sitze der hinteren Sitzreihe aus ihrer Gebrauchslage schnell und auf einfache Weise in eine Nichtgebrauchslage gebracht werden können, um den Laderaum des Fahrzeuges entsprechend dem zusätzlichen Raumbedarf zu vergrößern. Ebenso schnell und auf einfache Weise kann die Gebrauchslage der Sitze wieder hergestellt werden, so dass sie für Fahrgäste nutzbar sind. Die erfindungsgemäße Lösung schafft insgesamt die Möglichkeit, auf vorteilhafte Weise den hinteren Bereich des Innenraumes des Fahrzeuges entsprechend dem jeweiligen Bedarf schnell umzugestalten und zweckentsprechend zu nutzen. Durch die Erfindung ist somit wahlweise eine Nutzlast- oder Personenbeförderung möglich. Das separate Verändern der Position der einzelnen Sitze der hinteren Sitzreihe schafft die Möglichkeit, diesen Raum jederzeit optimal zu nutzen. Ein aufwendiger Aus- und Einbau der Sitze ist vorteilhafterweise nicht notwendig.

### BEZUGSZEICHENLISTE

- 10: Sitzteil
- 12: Rückenlehne
- 14: Kopfstütze
- 16: oberes Sitzkissen
- 18: unteres Sitzkissen
- 20: Rückseite (Rückenlehne)
- 22: Trägerteil
- 24: Querträger
- 26: erste Schwenkachse
- 28: zweite Schwenkachse
- 30: dritte Schwenkachse
- 32: oberer Boden
- 34: vorderes Bodenteil
- 36: hinteres Bodenteil
- 38: unterer Boden
- 40: Hutablage
- 42: Ablagebehälter
- 44: Fahrzeugboden
- 46: Gurthalterung
- 48: vierte Schwenkachse
- 50: Lagerpunkt
- 52: Pfeil
- 54: Haltearm, Lagerarm
- 56: Pfeil
- 58: Pfeil

- E: horizontale Ebene

## Patentansprüche

1. Fahrzeugsitz einer hinteren Sitzreihe eines Kraftfahrzeuges, mit einem Sitzteil (10) und einer Rückenlehne (12), wobei das Sitzteil (10) und die Rückenlehne (12) von einer Gebrauchslage in eine Nichtgebrauchslage und umgekehrt überführbar sind, wobei das Sitzteil (10) in einer im Wesentlichen horizontalen Fahrzeugebene (E) unterhalb der Rückenlehne (12) verschiebbar gelagert ist und die Rückenlehne (12) um eine Schwenkachse (26) in diese horizontale Fahrzeugebene (E) verschwenkbar ist, **dadurch gekennzeichnet, dass** das Sitzteil (10) aus einem oberen Sitzkissen (16) und einem unteren Sitzkissen (18) besteht und das untere Sitzkissen (16) des Sitzteiles (10) fest mit der Karosserie des Fahrzeuges verbunden ist, während das obere Sitzkissen (18) in der im Wesentlichen horizontalen Fahrzeugebene (E) unterhalb der Rückenlehne (12) angeordnet und in seiner Lage verschiebbar ist.

2. Fahrzeugsitz nach Anspruch 1, **dadurch gekennzeichnet, dass** das obere Sitzkissen (16) und das untere Sitzkissen (18) über Kontaktflächen in Verbindung stehen, die jeweils in einer horizontalen Ebene angeordnet sind, und die Rückenlehne (12) an ihrer Rückseite (20) mit einem Trägerteil (22) verbunden ist, das an einem Querträger (24) der Karosserie um eine quer zur Fahrtrichtung des Fahrzeuges verlaufende erste Schwenkachse (26) schwenkbar gelagert ist.

3. Fahrzeugsitz nach Anspruch 2, **dadurch gekennzeichnet, dass** im Laderaum des Fahrzeuges ein oberer Boden (32) und ein unterer Boden (38) parallel und beabstandet zueinander angeordnet sind, von denen jeweils der obere Boden (32) in seiner Position veränderbar und der untere Boden (38) fest mit der Karosserie des Fahrzeuges verbunden ist.

4. Fahrzeugsitz nach Anspruch 3, **dadurch gekennzeichnet, dass** der obere Boden (32) aus einem vorderen Bodenteil (34) und einem hinteren Bodenteil (36) besteht, von denen das vordere Bodenteil (34) an dem Querträger (24) der Karosserie um eine parallel zur ersten Schwenkachse (26) verlaufende zweite Schwenkachse (28) schwenkbar angeordnet ist und beide Bodenteile (34, 36) über ein Gelenk um eine dritte Schwenkachse (30) drehbeweglich miteinander verbunden sind, wobei die dritte Schwenkachse (30) parallel zur ersten Schwenkachse (26) und zur zweiten Schwenkachse (28) verläuft.

5. Fahrzeugsitz nach einem der Ansprüche 2 bis 4, **dadurch gekennzeichnet, dass** der Abstand des oberen Bodens (32) zum unteren Boden (38) so dimensioniert ist, dass in der Nichtgebrauchslage des Sitzteiles (10) dieser Zwischenraum wenigstens als Stauraum für das obere Sitzkissen (16) und die Hutablage (40) nutzbar ist.

6. Fahrzeugsitz nach einem der Ansprüche 2 bis 5, **dadurch gekennzeichnet, dass** der obere Boden (32) im Laderaum in der Höhe so angeordnet ist, dass die Ladekante und die Ladefläche des Fahrzeuges in der gleichen Ebene liegen.

7. Fahrzeugsitz nach Anspruch 4, **dadurch gekennzeichnet, dass** das vordere Bodenteil (34) und das hintere Bodenteil (36) des oberen Bodens (32) in Sandwichbauweise hergestellt sind.

8. Fahrzeugsitz nach Anspruch 2, **dadurch gekennzeichnet, dass** das Trägerteil (22) eine rückwärtige Auflagefläche aufweist, die ebenflächig ausgebildet ist.

9. Fahrzeugsitz nach Anspruch 2, **dadurch gekennzeichnet, dass** Gurthalterungen (46) am Fahrzeugboden (44) um eine vierte Schwenkachse (48), die parallel zu den anderen Schwenkachsen (26, 28, 30) verläuft, schwenkbar gelagert sind.

10. Fahrzeugsitz nach Anspruch 9, **dadurch gekennzeichnet, dass** im Bereich des unteren Sitzkissens (18) Freiraum zur Unterbringung der Gurthalterungen (46) vorgesehen ist.

11. Fahrzeugsitz nach Anspruch 2, **dadurch gekennzeichnet, dass** der Querträger (24) mit der Karosserie des Fahrzeuges vorzugsweise über Schraubverbindungen verbunden ist.

12. Fahrzeugsitz nach einem der vorhergehenden Ansprüche, **dadurch gekennzeichnet, dass** im Stauraum zwischen dem oberen Boden (32) und dem unteren Boden (38) wenigstens ein Ablagebehälter (42) angeordnet ist.

## Claims

1. Vehicle seat for the last seat row of an automotive vehicle, with a seat part (10) and a backrest (12), wherein the seat part (10) and the backrest (12) can be transferred from a use position into a not-in-use position and vice versa, wherein the seat part (10) is mounted displacably in an essentially horizontal vehicle plane (E) below the backrest (12) and the backrest (12) can be pivoted about a pivot axis (26) into this horizontal vehicle plane (E), **characterized in that** the seat part (10) comprises an upper seat cushion (16) and a lower seat cushion (18), and the lower seat cushion (16) of the seat part (10) is connected fixedly to the body of the vehicle while the upper seat cushion (18) is arranged in the essentially horizontal vehicle plane (E) below the backrest (12) and can be displaced in its position.

2. Vehicle seat according to Claim 1, **characterized in that** the upper seat cushion (16) and the lower seat cushion (18) are connected via contact surfaces which are each arranged in a horizontal plane, and the backrest (12) is connected on its rear side (20) to a support part (22) which is mounted on a crossmember (24) of the vehicle body in a manner such that it can pivot about a first pivot axis (26) running transversely with respect to the direction of travel of the vehicle.

3. Vehicle seat according to Claim 2, **characterized in that** an upper floor (32) and a lower floor (38) are arranged parallel to each other and at a distance from each other in the loading space of the vehicle, of which floors the upper floor (32) in each case can be changed in its position and the lower floor (38) is connected fixedly to the body of the vehicle.

4. Vehicle seat according to Claim 3, **characterized in that** the upper floor (32) comprises a front floor part (34) and a rear floor part (36), of which the front floor part (34) is arranged on the crossmember (24) of the vehicle body in a manner such that it can pivot about a second pivot axis (28) running parallel to the first pivot axis (26), and both floor parts (34, 36) are connected to each other via a joint in a manner such that they can rotate about a third pivot axis (30), the third pivot axis (30) running parallel to the first pivot axis (26) and to the second pivot axis (28).

5. Vehicle seat according to one of Claims 2 to 4, **characterized in that** the distance of the upper floor (32) from the lower floor (38) is dimensioned in such a manner that, in the not-in-use position of the seat part (10), this intermediate space can be used at least as a storage space for the upper seat cushion (16) and the rear parcel shelf (40).

6. Vehicle seat according to one of Claims 2 to 5, **characterized in that** the upper floor (32) is arranged in height in the loading space in such a manner that the loading edge and the loading surface of the vehicle lie in the same plane.

7. Vehicle seat according to Claim 4, **characterized in that** the front floor part (34) and the rear floor part (36) of the upper floor (32) are produced in a sandwich construction.

8. Vehicle seat according to Claim 2, **characterized in that** the support part (22) has a rear bearing surface of planar design.

9. Vehicle seat according to Claim 2, **characterized in that** seat belt mounts (46) are mounted on the vehicle floor (44) in a manner such that they can pivot about a fourth pivot axis (48) which runs parallel to the other pivot axes (26, 28, 30).

10. Vehicle seat according to Claim 9, **characterized in that** free space for accommodating the seat belt mounts (46) is provided in the region of the lower seat cushion (18).

11. Vehicle seat according to Claim 2, **characterized in that** the crossmember (24) is connected to the body of the vehicle preferably via screw connections.

12. Vehicle seat according to one of the preceding claims, **characterized in that** at least one storage container (42) is arranged in the storage space between the upper floor (32) and the lower floor (38).

## Revendications

1. Siège de véhicule pour une rangée de sièges arrière d'un véhicule automobile, comprenant une partie de siège (10) et un dossier (12), la partie de siège (10) et le dossier (12) pouvant être transférés d'une position d'utilisation dans une position de non utilisation et inversement, la partie de siège (10) étant montée en dessous du dossier (12) de manière déplaçable dans un plan (E) essentiellement horizontal du véhicule et le dossier (12) pouvant pivoter autour d'un axe de pivotement (26) dans ce plan (E) horizontal du véhicule, **caractérisé en ce que** la partie de siège (10) se compose d'un coussin de siège supérieur (16) et d'un coussin de siège inférieur (18) et **en ce que** le coussin de siège inférieur (18) de la partie de siège (10) est connecté fixement à la carrosserie du véhicule tandis que le coussin de siège supérieur (16) est disposé dans le plan (E) essentiellement horizontal du véhicule en dessous du dossier (12) et peut être déplacé.

2. Siège de véhicule selon la revendication 1, **caractérisé en ce que** le coussin de siège supérieur (16) et le coussin de siège inférieur (18) sont connectés par le biais de surfaces de contact qui sont disposées chacune dans un plan horizontal et le dossier (12) est connecté au niveau de son côté arrière (20) à une partie de support (22) qui est montée sur un support transversal (24) de la carrosserie de manière à pouvoir pivoter autour d'un premier axe de pivotement (26) s'étendant transversalement à la direction de conduite du véhicule.

3. Siège de véhicule selon la revendication 2, **caractérisé en ce que** dans l'espace de chargement du véhicule, sont disposés un fond supérieur (32) et un fond inférieur (38) parallèlement et espacés l'un de l'autre dont à chaque fois le fond supérieur (32) peut modifier sa position et le fond inférieur (38) est connecté fixement à la carrosserie du véhicule.

4. Siège de véhicule selon la revendication 3, **caractérisé en ce que** le fond supérieur (32) se compose d'une partie de fond avant (34) et d'une partie de fond arrière (36), dont la partie de fond avant (34) est disposée sur le support transversal (24) de la carrosserie de manière à pouvoir pivoter autour d'un deuxième axe de pivotement (28) s'étendant parallèlement au premier axe de pivotement (26), et les deux parties de fond (34, 36) sont connectées l'une à l'autre de manière mobile en rotation autour d'un troisième axe de pivotement (30) par le biais d'une articulation, le troisième axe de pivotement (30) s'étendant parallèlement au premier axe de pivotement (26) et au deuxième axe de pivotement (28).

5. Siège de véhicule selon l'une quelconque des revendications 2 à 4, **caractérisé en ce que** la distance du fond supérieur (32) au fond inférieur (38) est dimensionnée de telle sorte que dans la position de non utilisation de la partie de siège (10), cet espace intermédiaire puisse être utilisé au moins sous forme d'espace de rangement pour le coussin de siège supérieur (16) et la plage arrière (40).

6. Siège de véhicule selon l'une quelconque des revendications 2 à 5, **caractérisé en ce que** le fond supérieur (32) est disposé dans l'espace de chargement à une hauteur telle que l'arête de chargement et la surface de chargement du véhicule se situent dans le même plan.

7. Siège de véhicule selon la revendication 4, **caractérisé en ce que** la partie de fond avant (34) et la partie de fond arrière (36) du fond supérieur (32) sont fabriquées en construction en sandwich.

8. Siège de véhicule selon la revendication 2, **caractérisé en ce que** la partie de support (22) présente une surface d'appui arrière qui est réalisée avec une surface plane.

9. Siège de véhicule selon la revendication 2, **caractérisé en ce que** des fixations de ceinture (46) sont montées sur le fond du véhicule (44) de manière à pouvoir pivoter autour d'un quatrième axe de pivotement (48) qui s'étend parallèlement aux autres axes de pivotement (26, 28, 30).

10. Siège de véhicule selon la revendication 9, **caractérisé en ce que** dans la région du coussin de siège inférieur (18) est prévu un espace libre pour monter les fixations de ceinture (46).

11. Siège de véhicule selon la revendication 2, **caractérisé en ce que** le support transversal (24) est connecté à la carrosserie du véhicule de préférence par le biais de connexions vissées.

12. Siège de véhicule selon l'une quelconque des revendications précédentes, **caractérisé en ce que** dans l'espace de rangement entre le fond supérieur (32) et le fond inférieur (38) est disposé au moins un récipient de rangement (42).
